Europäisches Patentamt

European Patent Office

Office européen des brevets

(11) Veröffentlichungsnummer: **0 314 938**

**A2**

## (12) EUROPÄISCHE PATENTANMELDUNG

(21) Anmeldenummer: 88116714.2

(22) Anmeldetag: 08.10.88

(51) Int. Cl.⁴: **G02C 1/08 , G02C 5/22**

(30) Priorität: 02.11.87 DE 3737126

(43) Veröffentlichungstag der Anmeldung:
**10.05.89 Patentblatt 89/19**

(84) Benannte Vertragsstaaten:
**AT CH DE ES FR IT LI**

(71) Anmelder: **OBE-Werk Ohnmacht &
Baumgärtner GmbH & Co. KG
Turnstrasse 20
D-7536 Ispringen(DE)**

(72) Erfinder: **Drlik, Günther
Adolf-Sautter-Strasse 8
D-7530 Pforzheim 8(DE)**

(74) Vertreter: **Hubbuch, Helmut, Dipl.-Ing et al
Westliche 29-31 Am Leopoldplatz
D-7530 Pforzheim(DE)**

(54) **Brillenfassung mit Schraubsicherung.**

(57) Die Erfindung betrifft eine Schraubsicherung bei Verbindung zweier Brillenteile, insbes. beim Schließblock oder bei Scharnieren von Brillengestellen, wobei eine Bohrung mit einerseitigem Schraubgewinde und anderseitiger Schraubenkopfaufnahme als Ebene vorzugsweise Einsenkung für den Schraubenkopf der Gelenkschraube vorgesehen ist und die ein Wiederlösen und Verbinden, wie bei Brillengestellen für die Fertigung und die Benutzung erforderlich, ermöglicht.

Dies geschieht dadurch, daß in der Ebene oder Einsenkung für den Schraubenkopf ein Kragen angeordnet ist, welcher vorzugsweise nach innen konisch zuläuft und mit einer Eindrehschulter zwischen Schraubenbolzen und -kopf beim Einschrauben selbstsichernd zusammenwirkt.

*Fig. 2*

EP 0 314 938 A2

## Brillenfassung mit Schraubsicherungen

Die Erfindung bezieht sich auf eine Brillenfassung mit gegen Lösen gesicherten Schraubverbindung von Fassungsteilen insbesondere Schließblock- oder Scharnierteilen, wobei eine Bohrung mit einerseitigem Schraubgewinde und anderseitiger Schraubenkopfebene, insbes.-Aufnahme vorgesehen ist.

Man kennt solche wieder lösbare Schraubsicherungen bei Metall- und Kunststoffbrillen, z.B. in Form von auf das Gewinde des Schraubenbolzens aufbringbarem Kunststoffleck ( Tuflock) oder in eine Längsrille im Gewinde des Schraubenbolzens einlegbaren Kunststoffstrang (Longlock). Beide Formen der Schraubsicherung erfordern zusätzliche Arbeitsgänge und erschweren nicht nur das Wiederlösen der Schraubverbindung, sondern auch die Verschraubung selbst und sind überdies oft nach einmaligem Lösen nicht mehr griffig.

Auch sind nach dem Stand der Technik weitere Schraub sicherungen für diese Zwecke bekannt, so u.a. nach der FR - PS 25 91 762 für Schließblöcke, DE - GM 77 34 154 für Brillenscharniere u.a.; hier erfolgt jeweils nur eine kraftschlüssige und keine formschlüssige Sicherung. Beim DE - GM 19 46 895 ist die formschlüssige Verbindung durch einen zusätzlichen Arbeitsgang nachträglich vorgesehen worden. Im übrigen sind alle Vorschläge verhältnismäßig aufwendig.

Es ist nun Aufgabe der Erfindung hier eine mehrmals lös-und .wieder verschraubbare formschlüssige Sicherung für Schraubverbindungen zu schaffen, welche ein Wiederlösen und Verbinden, wie bei Brillengestellen für die Ferti gung und die Benutzung erforderlich, ermöglichen.

So muß der Schließblock zur Endbearbeitung von Metallbrillengestellen, wie Bearbeiten im Schüttelfaß, sowie abschließender galvanischer Behandlung und dgl. mehr geschlossen sein und sodann zur Glasfassung oder später für Glasersatz wieder geöffnet werden; das gleiche trifft auch zu für die Endbearbeitung von Brillenscharnieren bei Metall- und Kunststoffbrillen, welche später im Gebrauch vom Optiker auf die richtige Gängikeit eingestellt werden müssen, damit die geöffneten Brillenbügel durch zu leichten Gang nicht "Fallen" und dgl. mehr.

Nach der Erfindung wird diese Aufgabe bei einer Brillenfassung nach dem Oberbegriff des Anspruchs 1 dadurch gelöst, daß an der Auflagefläche des Schraubenkopfes um die Bohrung eine konusartige Erhöhung vorgesehen ist und daß der Bolzen-Innenrand unter dem Schraubenkopf eine konusartige Einschnürung aufweist, derart, daß die konusartige Erhöhung sich beim Einschrauben verformt und in die Einschnürung sichernd eingreift.

Hierdurch wird eine überraschend einfache Lösung des Problems der formschlüssigen Schraubsicherung bei Wiederlösbarkeit für den Brillenfachmann aufgezeigt.

Auch kann nach einem weiteren Gedanken der Erfindung die Aufgabe bei einer Brillenfassungnach dem Oberbegriff des Anspruchs '2' dadurch gelöst werden, daß an der Auflagefläche des Schraubenkopfes am Außenumfang eine konusartige Einlassung vorgesehen ist und daß der Bolzen am Außenrand unter dem Schraubenkopf einen konusartigen Fortsatz aufweist, derart, daß der konusartige Fortsatz sich beim Einschrauben verformt und in die Einlassung sichernd eingreift. Auch hierzu gilt das Vorgesagt einer überraschend einfachen Lösung des hier anstehenden Problems. Hierbei läuft die konusartige Erhöhung bzw. Einlassung in der Schraubenkopfaufnahme als spitzwinkliger Ring - ansatz bzw. - einschnitt zwischen $35°$ und $45°$ um den Bohrungs - bzw. Aufnahmerand.

Weitere Einzelheiten der Brillenfassung mit Schraubsicherung bei Schraubverbindungen von Fassungsteilen gemäß der Erfindung ergeben sich aus der folgenden Beschreibung von bevorzugten Ausführungsbeispielen in Verbindung mit der Zeichnung und zwar zeigen :

Figur 1 und 2 die Seitenansicht und Draufsicht -teilweise geschnitten - einer ersten Ausführungsform eines Brillenscharniers,

Figur 3 und 4 die Seitenansicht und Draufsicht - teilweise geschnitten - einer zweiten Aus -führungsform eines Brillenscharniers,

Figur 5 die perspektivische Ansicht eines Schließblocks für eine Metallbrille,

Figur 6 bis 9 die Draufsicht und Schnitte einschl. Schraube für diese Schließblock-Ausführung,

Figur 10 bis 13 die Draufsicht und Schnitte einschl. Schraube für eine solche Schraubsicherungs-Ausführung.

Figur 14 bis 16 die Seitenansicht und Draufsichtteilweise geschnitten - sowie die Schraube einer weiteren Ausführung eines Brillenscharniers,

Figur 17 bis 19 die Seitenansicht und Draufsicht teilweise geschnitten - sowie die Schraube einer weiteren Ausführung einer Schließblock-Verbindung,

Figur 20 die perspektivische Ansicht der Schraube nach Fig.19 und

Figur 21 die perspektivische Ansicht einer Schließblock-Ausführung um $180°$ gedreht.

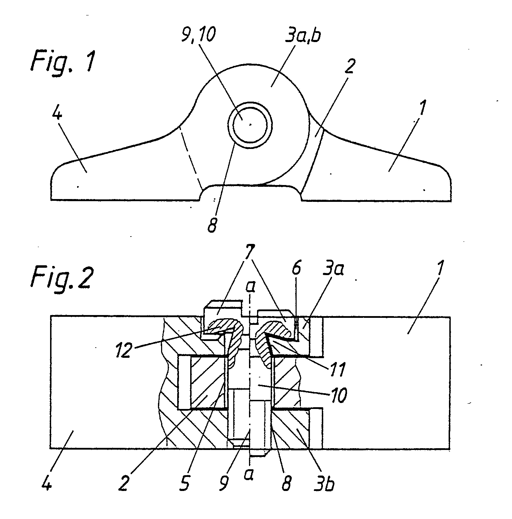

Bei der ersten Ausführungsform nach Fig. 1 und 2 eines Brillenscharniers nach der Erfindung für Metall-und Kunststoffbrillen ist das Mittelteilscharnier 1 mit einem Scharnierauge 2 ersichtlich, welches zwischen den beiden Scharnieraugen 3a und 3b des Bügelteilscharniers 4 liegt. Die Scharnierbohrung 5 weist hier bei 3a eine Einsenkung 6 für den Schraubenkopf 7 und bei 3b ein Schraubgewinde 8 für den Gewindeteil 9 des Schraubenbolzens 10 auf.

Die Einsenkung 6 beseitzt hier einen Kragen 11 entlang der Bohrungskante (von 5). welcher nach innen konisch zuläuft und mit einer entsprechenden Eindrehungsschulter 12 zwischen Schraubenbolzen 10 und Schraubenkopf 7 beim Einschrauben, wie aus der Zeichnung ersichtlich, selbstsichernd zusammenwirkt. Hierbei ist links der Linie a-a eine Schraubenhälfte beim Eindrehen und rechts hiervon nach dem Eindrehen gezeigt.

Der Schraubenbolzen 10 mit -kopf 7 ist hier aus Edelstahl gefertigt, während die Scharnierteile aus Neusilber bestehen. Beim Einschrauben wird somit der spitze Kragen 11 in die Eindrehschulter 12 zur Sicherung gedrückt, wobei zum Öffnen des Scharniers sich diese Verbindung wieder lösen lässt und zur neuen Sicherung beim Wiedereinschrauben der Gelenkschraube 7,9,10 dient.

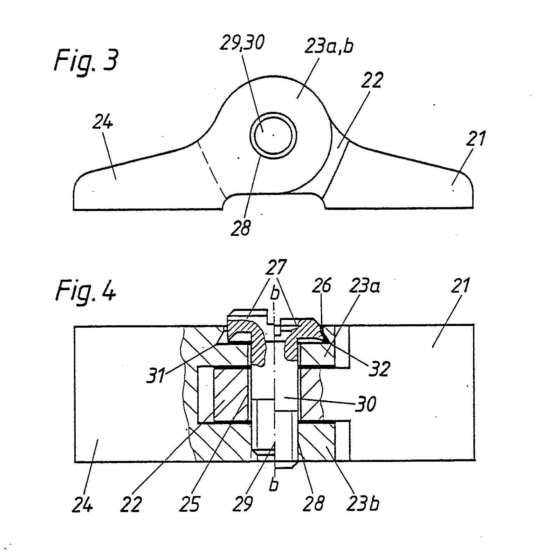

Bei der zweiten Ausführungsform nach Fig. 3 und 4 eines Brillenscharniers nach der Erfindung ist das Mittelteilscharnier 21 mit einem Scharnierauge 22, welches ebenfalls zwischen den beiden Scharnieraugen 23a und 23b des Bügelteilscharniers 24 zu liegen kommt, ersichtlich. Die Scharnierbohrung 25 weist hier bei 23a eine Einsenkung 26 für den Schraubenkopf 27 und bei 23b ein Schraubgewinde 28 für den Gewindeteil 29 des Schraubenbolzen 30 auf.

Die Einsenkung 26 besitzt hier eine Hinterschneidung 31, welche mit einer Andrehung 32 am Unterrand des Schraubenkopfes 27 die nach aussen konisch zuläuft, beim Einschrauben, wie aus der Zeichnung ersichtlich, selbstsichernd zusammenwirkt. Hierbei ist links der Linie b-b eine Schraubenhälfte beim Eindrehen und rechts hiervon nach dem Eindrehen gezeigt.

Beim Einschrauben wird somit die spitze Andrehung 32 am Unterrand des Schraubenkopfes 27 in die Hinterdrehung 31 zur Sicherung eingebracht, wobei zum Öffnen des Scharniers diese Verbindung wieder lösbar ist und zur neuen Sicherung beim Wiedereinschrauben der Gelenkschraube 27, 29, 30 dient.

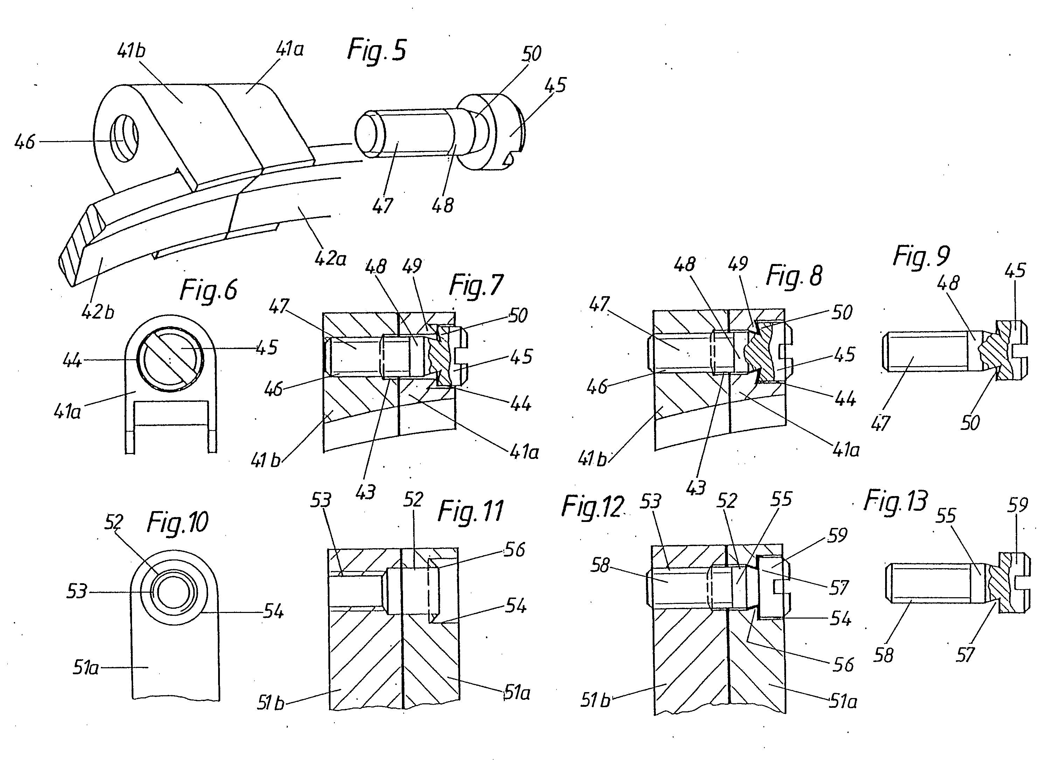

In Fig. 5 bis 9 ist sodann als weiteres Ausführungsbeispiel eine Schließblockausführung für Metallrandbrillen dargestellt, wobei die beiden Schließblockteile 41a und 41b an den entsprechenden Enden des Augenglasrandes 42a und 42b aufgelötet sind zum Öffnen und Schließen beim Einsetzen der Brillengläser. Hierbei besitzt der eine Schließblock 41a an der Bohrung 43 eine Einsenkung 44 für den Schraubenkopf 45 und der zweite Schließblockteil 41b ein Schraubgewinde 46 für den Gewindeteil 47 des Schraubenbolzens 48.

Hier besitzt die Einsenkung 44 einen Kragen 49 entlang der Bohrungskante (43), welche nach innen konisch zuläuft und mit einer entsprechenden Eindrehschulter 50 zwischen Schraubenbolzen 48 und Schraubenkopf 45 beim Eindrehen, wie aus der Zeichnung ersichtlich selbstsichernd zusammenwirkt.

Ein weiteres Ausführungsbeispiel ist in Fig. 10 bis 13 als Schraubsicherung dargestellt, bei welcher in einem zweiteiligem Block 51a, 51b mit Bohrung 52 und Gewinde 53 einerseits sowie Ausdrehung 54 andererseits eine Schraube 55 eingebracht ist, wobei die Sicherung wiederum durch einen konischen Kragen 56 im Grunde der Ausdrehung 54 am Bohrungsloch 52 ersichtlich wird, welcher (56) an der Schraube 55 mit Hinterschneidung 57 zwischen Schraubgewinde 58 und Schraubenkopf 59, wie aus der Zeichnung ersichtlich, beim Einschrauben wieder lösbar eingedrückt wird.

Das erfindungsgemäße Prinzip läßt sich auch verwenden für die Kombination von Scharnier- und Schließblock sogenannten Schließblockbacken bei doppelter Anwendung.

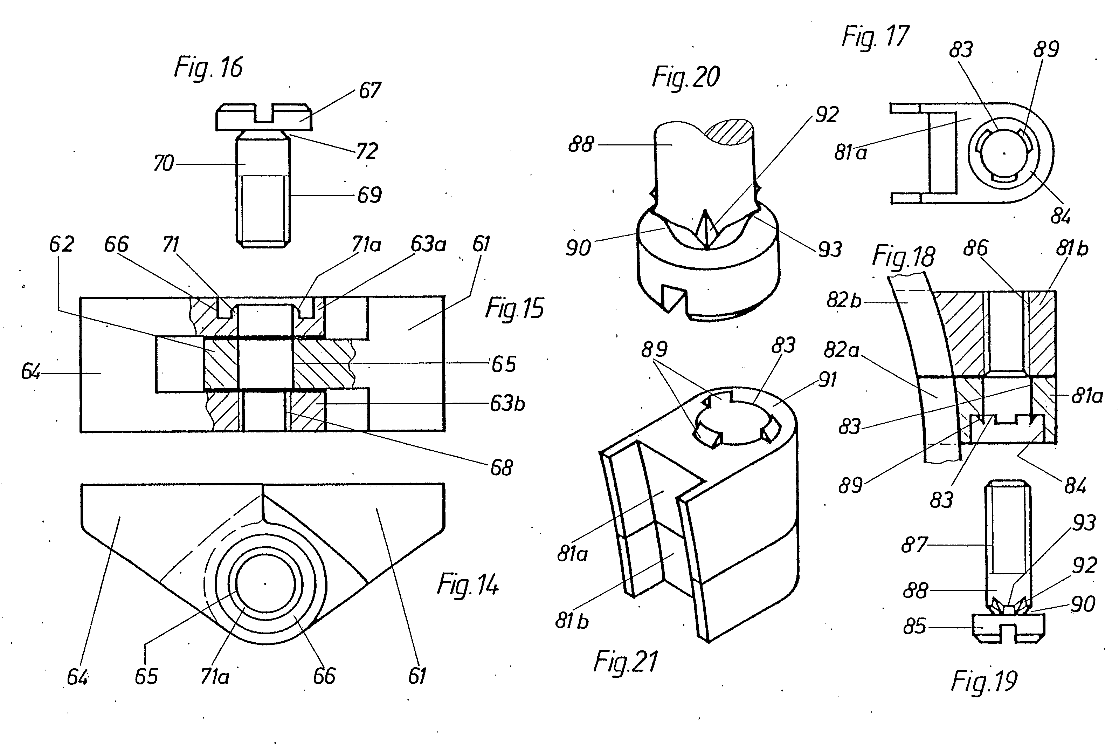

Ein zusätzliches Ausführungsbeispiel ist in Figur 14 bis 16 als Schraubsicherung für ein Brillenscharnier nach einem weiteren Gedanken der Erfindung dargestellt. Hieraus wird das Mittelteilscharnier 61 mit einem Scharnierauge 62 ersichtlich, welches zwischen den beiden Scharnieraugen 63a und 63b des Bügelscharniers 64 liegt. Die Scharnierbohrung 65 weist hier bei 63a eine Einsenkung 66 für den Schraubenkopf 67 und bei 63b ein Schraubgewinde 68 für den Gewindeteil 69 des Schraubenbolzens 70 auf.

Die Einsenkung 66 weist ferner einen Kragen 71 entlang der Bohrungskante (von 65) auf, welcher in Form eines Zylinderstücks mit oberem Konusrand 71a ausgebildet ist, und mit einer entsprechenden Eindrehungsschulter 72 zwischen Schraubenbolzen 70 und Schraubenkopf 67 beim Einschrauben, wie aus der Zeichnung der vorhergehenden Ausführungsbeispiele ersichtlich, selbstsichernd zusammenwirkt.

Auch hier ist zweckmäßiger Weise der Schraubenbolzen 70 mit-Kopf 6 7 aus Edelstahl gefertigt und die Scharnierteile aus Neusilber. Beim Einschrauben wird somit der obere Konusrand 71a mit anschließendem Zylinderstück in die Eindrehschulter 72 gedrückt und beim Öffnen der Scharnierschraube am Kopf 67 umgekehrt hochgestellt.

Hierbei erleichtert das Zylinderstück des Kragens 71 das Ein- und Ausbringen infolge geringerer Wandstärke gegenüber dem ersten Ausführungsbeispiel nach Figur 1 und 2 mit spitzem Kragen 11 als durchgehenden Ringkonus, d.h. der Einbördelungsdruck wird verringert.

Ein letztes Ausführungsbeispiel ist in Figur 17 bis 21 als Schließblock dargestellt. Hierbei sind die beiden Schließblockteile 81a und 81b an den entsprechenden Enden des Augenglasrandes 82a und 82b angelötet und werden zum Einsetzen der Brillengläser geöffnet und wieder geschlossen. Hierbei besitzt der eine Schließblock 81a an der Bohrung 83 eine Einsenkung 84 für den Schraubenkopf 85 und der zweite Schließblock 81b ein Schraubgewinde 86 für den Gewindeteil 87 des Schraubenbolzen 88.

Hier weist die Einsenkung 84 anstelle eines Kragens entlang der Bohrungskante 83 Konuslappen 89 mit Zwischenräumen auf, welche konisch zulaufen und mit einer entspr. Eindrehschulter 90 zwischen Schraubenbolzen 88 und Schraubenkopf 85 beim Eindrehen entsprechend dem früheren Ausführungsbeispiel selbstsichernd zusammenwirken.

Hier sind in Fig.21 die Konuslappen 89 ohne Einsenkung für den Schraubenkopf 85 auf der Ebene 91 an der Bohrungskante 83 für die Scharnierschraube angeordnet.

Die Einschnürung (Eindrehschulter 90 ) unter dem Schraubenkopf 85 weist überdiese noch schräg radiale Kerben 92 mit entspr. Aufwürfen 93 auf. Hierdurch wird neben dem axialen Formschluß, welcher bei allen vorhergehenden Ausführungsbeispielen vorhanden ist, zusätzlich noch ein radialer Formschluß erreicht. Dies ist insbes. bei Schließblöcken wichtig, bei welchen eine gewisse Vorspannung notwendig ist, die im Laufe der Zeit beispielsweise durch die Alterung bei eingesetzten Kunststoffgläsern nachläßt und damit zur Selbstlockerung führen kann, was durch den doppelten Formschluß - axial und radial - vermieden wird. Bei der lösbaren Schraubverbindung gemäß der Erfindung wird die Schraube unverlierbar gehalten, sowohl beim Brillenscharnier als auch beim Schließblock.

**Ansprüche**

1. Brillenfassung mit einer gegen Lösen gesicherten Schraubverbindung von Fassungsteilen insbesondere Schließblock- oder Scharnierteilen, wobei eine Bohrung mit einerseitigem Schraubgewinde und anderseitiger Schraubenkopfebene insbes.-Aufnahme vorgesehen ist, **dadurch gekennzeichnet,** daß an der Auflagefläche des Schraubenkopfes um die Bohrung eine konusartige Erhöhung vorgesehen ist und daß der Bolzen-Innenrand unter dem Schraubenkopf eine konusartige Einschnürung aufweist, derart, daß die konusartige Erhöhung sich beim Einschrauben verformt und in die Einschnürung sichernd eingreift.

2. Brillenfassung mit einer gegen Lösen gesicherten Schraubenverbindung von Fassungsteilen insbesondere Schließblock- oder Scharnierteilen, wobei eine Bohrung mit einerseitigem Schraubgewinde und anderseitiger Schraubenkopfebene, insbes.-Aufnahme vorgesehen ist, **dadurch gekennzeichnet,** daß an der Auflagefläche des Schraubenkopfes am Außenumfang eine konusartige Einlassung vorgesehen ist und daß der Bolzen am Außenrand unter dem Schraubenkopf einen konusartigen Fortsatz aufweist, derart, daß der konusartige Fortsatz sich beim Einschrauben verformt und in die Einlassung sichern eingreift.

3. Brillenfassung nach Anspruch 1 oder 2 , **dadurch gekennzeichnet,** daß die konusartige Erhöhung bzw. Einlassung in der Schraubenkopfaufnahme als spitzwinkliger Ringansatz bzw. -einschnitt zwischen 35° und 45° um den Bohrungs- bzw. Aufnahmerand läuft.

4. Brillenfassung nach einem der Ansprüche 1 bis 3 **dadurch gekennzeichnet,** daß das Schraubgewinde im einen Brillenteil und die Schraubenkopfaufnahme mit Ringansatz bzw. -einschnitt im anderen Brillenteil vorgesehen ist (Schließblock).

5. Brillenfassung nach einem der Ansprüche 1 bis 3 **dadurch gekennzeichnet,** daß das Schraubgewinde und die Schraubenkopfaufnahme mit Ringansatz bzw. -einschnitt beidseits in einem geteilten Brillenteil mit zwischenliegendem zweiten Brillenteil vorgesehen ist (Scharnier).

6. Brillenfassung nach einem der Ansprüche 1 bis 3 od.5, **dadurch gekennzeichnet,** daß bei einem Schraubenbolzen mit-Kopf aus Edelstahl die Brillenscharnierteile aus Neusilber gebildet sind.

7. Brillenfassung nach Anspruch 1, **dadurch gekennzeichnet,** daß die konusartige Erhöhung an der Auflagefläche des Schraubenkopfes um die Bohrung als Zylinderstück mit oberem Konusrand ausgebildet ist.

8. Brillenfassung nach Anspruch 1, **dadurch gekennzeichnet,** daß konusartige Erhöhung an der Auflagefläche des Schraubenkopfes um die Bohrung als Konuslappen mit Zwischenräumen ausgebildet sind.

9. Brillenfassung nach Anspruch 1, dadurch gekennzeichnet, daß die konusartige Einschnüring am Bolzen-Innenrand unter dem Schraubenkopf schräg radiale Kerben mit entspr. Aufwürfen aufweist.

10. Brillenfassung nach Anspruch 8 und 9, **dadurch gekennzeichnet,** daß bei zusammenwirkenden Konuslappen der Schraubenkopf-Auflage mit schräg radialen Kerben an der Einschnürung am Bolzen-Innenrand unter dem Schraubenkopf die Lappen- und Kerbenzahl unterschiedlich ist, insbes. bei drei Konuslappen vier schräg radiale Einkerbungen vorgesehen sind.

Fig. 1

Fig. 2

EP 0 314 938 A2

Fig. 3

Fig. 4

Fig. 16

Fig. 20

Fig. 17

67

72

70

69

62 66 71 71a 63a 61

Fig. 15

65

64

63b

68

88

92

90

93

81a

83

89

84

Fig. 18

86

81b

82b

82a

81a

83

89

84

83

89

83

91

81a

81b

Fig. 21

87

93

88

92

90

85

Fig. 19

64 65 71a 66 61

Fig. 14

EP 0 314 938 A2